# FASCICULE DE BREVET EUROPEEN

(11) **EP 4 136 475 B1**
(45) Date de publication et mention de la délivrance du brevet: **05.03.2025**
(21) Numéro de dépôt: 21712843.8
(22) Date de dépôt: 22.03.2021
(51) Int. Cl.: G01S 13/931, G01S 7/41, G01S 13/536, G01S 13/52

(54) **PROCÉDÉ DE DÉTECTION D'UNE SITUATION D'EMBOUTEILLAGE SUR UN VÉHICULE AUTOMOBILE**
VERFAHREN ZUR ERKENNUNG EINER VERKEHRSSTAUSITUATION IN EINEM KRAFTFAHRZEUG
METHOD FOR DETECTING A TRAFFIC CONGESTION SITUATION IN A MOTOR VEHICLE

(30) Priorité: 16.04.2020 FR 2003851
(43) Date de publication de la demande: 22.02.2023
(73) Titulaire: Ampere SAS, 92100 Boulogne-Billancourt (FR); NISSAN MOTOR CO., LTD., Kanagawa 221-0023 (JP)
(72) Inventeur: PITA-GIL, Guillermo, 7800 VERSAILLES (FR); ZAIR, Salim, 91300 Massy (FR)
(74) Mandataire: Renault Group
(86) Numéro de dépôt international: PCT/EP2021/057192
(87) Numéro de publication internationale: WO 2021/209225

(56) Documents cités:
- US-A1- 2013 103 296
- US-A1- 2013 268 152
- US-A1- 2019 163 180
- US-A1- 2020 011 966

## Description

La présente invention concerne le domaine de la conduite autonome d'un véhicule automobile sur une voie de circulation. Elle concerne plus particulièrement un procédé de détection d'une situation d'embouteillage par un véhicule automobile.

Dans le cadre d'un mode de conduite autonome de niveau 3 OICA (acronyme pour «Organisation internationale des Constructeurs Automobiles), le conducteur n'effectue aucune des tâches opérationnelles de conduite, telles que l'accélération, le freinage ou la manipulation du volant, qui sont ainsi déléguées au système de commande en mode autonome du véhicule, qui assure le contrôle complet du véhicule. Le conducteur est donc autorisé à ne pas tenir le volant pour réaliser d'autres tâches en parallèle, comme par exemple regarder un film sur un écran de son véhicule. Cependant, la conduite autonome de niveau 3 a une plage de fonctionnement limitée et ne peut avoir lieu que dans certaines conditions environnementales et de trafic. En particulier, le niveau 3 d'autonomie ne peut être activé que pour des vitesses inférieures à 60 km/h sur des routes à chaussées séparées, typiquement des autoroutes, et en situation d'embouteillage. Il est relativement aisé de vérifier les conditions d'activation de ce niveau d'autonomie qui sont liées au positionnement du véhicule sur une route à chaussée séparée et au non dépassement du seuil de vitesse de 60 km/h, notamment au moyen du système de navigation et des capteurs embarqués servant à mesurer la vitesse du véhicule. Par contre, il est beaucoup plus complexe d'évaluer si le véhicule se trouve en situation de roulage en embouteillage. On considère que le véhicule se trouve dans une situation de roulage en embouteillage s'il est « entouré » à l'avant, à l'arrière, ainsi que sur ses cotés droit et gauche, par des véhicule ou des obstacles, tels que des murs ou des barrières, autrement dit, si le véhicule se trouve contraint dans son environnement proche dans toutes les directions par d'autres véhicules ou obstacles.

On utilise à cet égard des capteurs de détection d'obstacles émettant une onde qui se réfléchit à la surface des objets situés dans la direction de propagation. La comparaison de l'onde incidente avec son écho permet d'estimer un temps de propagation, un déphasage ou un éventuel décalage de fréquence, qui fournissent ensuite la distance séparant le capteur de la surface de l'objet formant l'écho. Le type de capteur le plus couramment utilisé pour les applications automobiles est le radar. Le principe du radar repose sur l'émission d'une onde électromagnétique et la réception de l'écho formé par cette onde sur une surface pour estimer la distance à cette surface. Par ailleurs, si l'objet réfléchissant est animé d'une certaine vitesse relativement au radar, l'onde réfléchie aura une fréquence sensiblement différente de celle de l'onde incidente, ce qui permet d'obtenir une mesure de la vitesse relative entre le radar et l'objet réfléchissant. Cependant, le radar présente un certain nombre de limitations. En particulier, l'analyse des données radar laisse apparaître de nombreux échos parasites sur la route ou sur les bords de route. Aussi, pour éviter que cela ne provoque un grand nombre de fausses détections, les objets statiques sont généralement filtrés en comparant la mesure de leur vitesse à la vitesse du véhicule équipé. Ainsi, un véhicule à l'arrêt ne sera pas détecté. Autrement dit, les objets immobiles sont « invisibles » pour le radar. Il s'agit là d'un frein important au déploiement du mode de conduite autonome au niveau 3 d'autonomie, car ce mode de conduite autonome du véhicule ne peut s'activer qu'en situation d'embouteillage, alors que, précisément, le cas le plus typique d'une telle situation, correspondant à tous les véhicules environnants à l'arrêt, n'est pas détecté par les radars équipant le véhicule hôte. La disponibilité de la conduite autonome de niveau 3 s'en trouve donc fortement limitée.

Le document de brevet WO201202099 décrit un dispositif d'estimation de la congestion du trafic destiné à avertir le conducteur d'une situation dangereuse sur la route. Le dispositif comprend une unité de détection de vitesse configurée pour détecter la vitesse d'un véhicule hôte, une unité de détection de distance configurée pour détecter une distance inter-véhicule entre le véhicule hôte et un autre véhicule, une unité de calcul configurée pour calculer une corrélation sur la base du résultat de la détection de vitesse et de la détection de distance entre véhicules, et une unité d'estimation de l'état du trafic sur la base du résultat du calcul de corrélation.

Quoique basée sur le principe de la division des faisceaux radar en secteurs angulaires, l'analyse de chaque secteur indépendamment et la combinaison des données de détection pour estimer l'état du trafic, cette solution ne semble pas mettre en œuvre un filtrage des objets immobiles. Aussi, elle nécessite d'utiliser des capteurs radar haut de gamme capables de détecter également des objets environnants de vitesse nulle. Le document US2013/103296A1 présente des inconvénients similaires.

Cette solution n'est donc pas totalement optimisée et il existe donc le besoin d'une solution améliorée permettant d'accroître à moindre coût les performances et la robustesse de la détection d'une situation d'embouteillage.

A cette fin, l'invention concerne un procédé de détection d'une situation d'embouteillage selon la revendication 1, et de façon non exhaustive, à l'aide d'un système radar équipant un véhicule automobile hôte, ledit système radar comprenant des capteurs radars multifaisceaux agencés aux coins arrière et avant du véhicule hôte, les faisceaux radar de chaque capteur radar étant émis dans différentes directions de visée données de manière à couvrir, pour chaque capteur radar, une zone de détection s'étendant entre une direction radiale orientée obliquement vers l'avant et une direction radiale orientée obliquement vers l'arrière, chaque capteur radar étant apte à fournir, pour chaque direction de visée donnée, la distance de portée du faisceau radar émis dans ladite direction, le procédé étant caractérisé en ce qu'il comprend des étapes de :
- répartition de l'ensemble des faisceaux radar émis par les capteurs radar suivant une division de l'environnement du véhicule en quatre secteurs angulaires, opposés deux à deux, s'étendant respectivement vers l'avant et vers l'arrière du véhicule et vers le côté droit et vers le côté gauche du véhicule,
- sélection pour chacun des quatre secteurs angulaires, parmi les faisceaux répartis dans chacun d'eux pour lesquels aucune cible n'est détectée, du faisceau présentant la distance de portée la plus courte,
- détection de l'amplitude des faisceaux réfléchis correspondant respectivement auxdits faisceaux sélectionnés dans les quatre secteurs angulaires, et
- analyse de la durée de maintien de l'amplitude desdits faisceaux réfléchis par rapport à un seuil de temps prédéfini pour chaque secteur angulaire respectivement,
le procédé détectant une situation d'embouteillage lorsque l'étape d'analyse détermine simultanément pour les quatre secteurs angulaires, que ladite durée de maintien de l'amplitude est supérieure ou égale audit seuil de temps prédéfini.

Grâce à cette combinaison d'étapes, il est possible de détecter une situation d'embouteillage à l'aide des capteurs radars, même lorsque les véhicules environnants sont à l'arrêt.

Avantageusement, l'étape d'analyse comprend en outre une étape de comparaison de la distance de portée de chaque faisceau sélectionné dans les quatre secteurs angulaires avec un seuil de distance prédéfini pour chaque secteur angulaire respectivement, le procédé détectant une situation d'embouteillage lorsque l'étape de comparaison détermine simultanément pour les quatre secteurs angulaires que ladite distance de portée est inférieure ou égale audit seuil de distance prédéfini.

De préférence, ledit seuil de distance prédéfini est fixé inférieur ou égal à 5m, de préférence égal à 3m, pour les secteurs angulaires s'étendant vers l'avant et vers l'arrière du véhicule hôte.

De préférence, ledit seuil de distance prédéfini est fixé inférieur ou égal à 2m, de préférence égal à 1,5m, pour les secteurs angulaires s'étendant du coté droit et du côté gauche du véhicule hôte.

Avantageusement, le procédé comprend une étape d'activation d'un mode autonome de conduite du véhicule hôte lorsqu'une situation d'embouteillage est détectée.

Avantageusement, ledit mode autonome de conduite est adapté pour assurer l'ensemble des tâches opérationnelles de conduite du véhicule hôte.

L'invention concerne également un dispositif de détection d'une situation d'embouteillage selon la revendication 7, et comportant, de façon non exhaustive, un système radar embarqué sur un véhicule automobile hôte, ledit système radar comprenant des capteurs radars multifaisceaux agencés aux coins arrière et avant dudit véhicule, les faisceaux radar étant émis dans différentes directions de visée données de manière à couvrir, pour chaque capteur radar, une zone de détection s'étendant entre une direction radiale orientée obliquement vers l'avant et une direction radiale orientée obliquement vers l'arrière, chaque capteur radar étant apte à fournir, pour chaque direction de visée donnée, la distance de portée du faisceau radar émis dans ladite direction, le dispositif étant caractérisé en ce qu'il comprend une unité de traitement des faisceaux radars émis, adaptée pour opérer une répartition de l'ensemble des faisceaux radar émis par les capteurs radar suivant une division de l'environnement du véhicule en quatre secteurs angulaires, opposés deux à deux, s'étendant respectivement vers l'avant et vers l'arrière du véhicule et vers le côté droit et vers le côté gauche du véhicule, et à sélectionner pour chacun desdits quatre secteurs angulaires, parmi les faisceaux répartis dans chacun d'eux pour lesquels aucune cible n'est détectée, le faisceau présentant la distance de portée la plus courte, ladite unité de traitement comprenant un module d'analyse adapté à vérifier la durée de maintien de l'amplitude des faisceaux réfléchis correspondant respectivement auxdits faisceaux sélectionnés dans les quatre secteurs angulaires, par rapport à un seuil de temps prédéfini pour chaque secteur angulaire respectivement, ledit dispositif détectant une situation d'embouteillage lorsque ledit module d'analyse détermine simultanément pour les quatre secteurs angulaires, que ladite durée de maintien de l'amplitude est supérieure ou égale audit seuil de temps prédéfini.

Avantageusement, le dispositif comprend en outre un module de comparaison de la distance de portée de chaque faisceau sélectionné dans les quatre secteurs angulaires avec un seuil de distance prédéfini pour chaque secteur angulaire respectivement, le dispositif détectant une situation d'embouteillage lorsque le module de comparaison détermine simultanément pour les quatre secteurs angulaires que ladite distance de portée est inférieure ou égale audit seuil de distance prédéfini.

Avantageusement, le dispositif comprend en outre un module de comparaison de la distance de portée de chaque faisceau sélectionné dans les quatre secteurs angulaires avec un seuil de distance prédéfini pour chaque secteur angulaire respectivement, le dispositif détectant une situation d'embouteillage lorsque le module de comparaison détermine simultanément pour les quatre secteurs angulaires que ladite distance de portée est inférieure ou égale audit seuil de distance prédéfini.

Avantageusement, le dispositif comprend des moyens d'activation d'un système de commande en mode autonome du véhicule lorsqu'une situation d'embouteillage est détectée.

L'invention concerne encore un véhicule automobile caractérisé en ce qu'il comprend un dispositif tel que décrit dans l'une quelconque des revendications 7 à 9

D'autres caractéristiques et avantages de l'invention ressortiront clairement de la description qui en est faite ci-après, à titre indicatif et nullement limitatif, en référence aux dessins annexés sur lesquels :
[Fig. 1] est une vue schématique de dessus illustrant la mise en œuvre du procédé selon l'invention.
[Fig. 2] illustre schématiquement un mode de réalisation d'une unité de traitement des faisceaux radars émis, pour la mise en œuvre du procédé de l'invention.

Dans la présente description, les termes avant, arrière, droit, gauche sont désignés par rapport aux directions avant et arrière du véhicule et par rapport au sens normal de déplacement de ce véhicule.

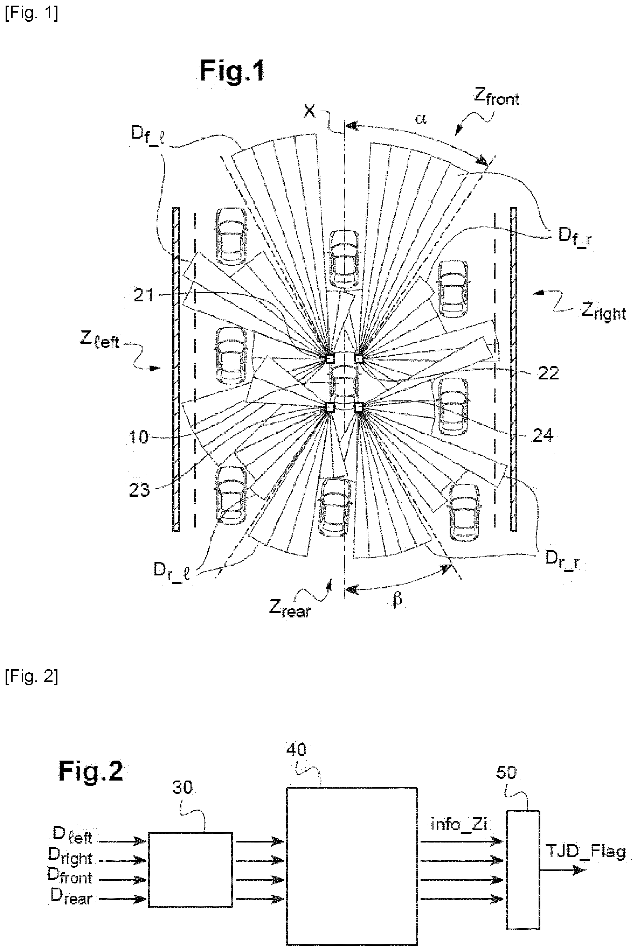

En référence à la figure 1 est illustré un système de détection d'objet installé sur un véhicule automobile hôte 10. Le système de détection d'objet comprend quatre capteurs de détection d'objet agencés aux quatre coins du véhicule, respectivement un capteur de coin avant gauche 21, un capteur de coin avant droit 22, un capteur de coin arrière gauche 23 et un capteur de coin arrière droit 24. Ces capteurs de coin sont par exemple positionnés au niveau des extrémités latérales d'une face des pare-chocs avant et arrière du véhicule. Ces capteurs de détection d'objet 21-24 peuvent être par exemple des capteurs radars et, en particulier des capteurs radars multifaisceaux aptes à émettre des faisceaux radar dans différentes directions de visée données de manière que chaque capteur radar 21-24 puisse balayer une zone de détection s'étendant sur une plage angulaire donnée, par exemple de sensiblement 180°, entre une direction radiale orientée obliquement vers l'avant et une direction radiale orientée obliquement vers l'arrière. La zone de détection de chaque capteur radar 21-24 présente sensiblement une forme de demi- cercle.

La zone de détection du capteur radar 21 disposé sur le coin avant gauche s'étend sur une plage angulaire de sensiblement 180° délimitée entre une direction radiale orientée obliquement vers l'avant droit et une direction radiale sensiblement opposée, orientée obliquement vers l'arrière gauche, de sorte que la zone de détection couverte par le capteur radar 21 disposé sur le coin avant gauche s'étend sur l'avant du véhicule et le côté gauche du véhicule.

De façon similaire, la zone de détection du capteur radar 22 disposé sur le coin avant droit s'étend sur une plage angulaire de sensiblement 180° délimitée entre une direction radiale orientée obliquement vers l'avant gauche et une direction radiale orientée obliquement vers l'arrière droit, de sorte que la zone de détection couverte par le capteur radar 22 disposé sur le coin avant droit s'étend sur l'avant du véhicule et le côté droit du véhicule.

De façon similaire encore, la zone de détection du capteur radar 23 disposé sur le coin arrière gauche s'étend sur une plage angulaire de sensiblement 180° délimitée entre une direction radiale orientée obliquement vers l'avant gauche et une direction radiale orientée obliquement vers l'arrière droit, de sorte que la zone de détection couverte par le capteur radar 23 disposé sur le coin arrière gauche s'étend sur l'arrière du véhicule et le côté gauche du véhicule.

Enfin, la zone de détection du capteur radar 24 disposé sur le coin arrière droit s'étend sur une plage angulaire de sensiblement 180° délimitée entre une direction radiale orientée obliquement vers l'avant gauche et une direction radiale orientée obliquement vers l'arrière droit, de sorte que la zone de détection couverte par le capteur radar 24 disposé sur le coin arrière droit s'étend sur l'arrière du véhicule et le côté droit du véhicule.

Ainsi, les capteurs radars de coin 21-24 sont capables de détecter des objets dans l'environnement du véhicule à la fois sur les côtés droit et gauche du véhicule et sur l'avant et l'arrière du véhicule.

Les zones de détection des capteurs radars disposés sur les coins avant gauche et droit se recouvrent partiellement sur l'avant du véhicule, les zones de détection des capteurs radars disposés sur les coins avant gauche et arrière gauche se recouvrent partiellement sur le côté gauche du véhicule, les zones de détection des capteurs radars disposés sur les coins arrière gauche et droit se recouvrent partiellement sur l'arrière du véhicule et les zones de détection des capteurs radars disposés sur les coins arrière droit et avant droit se recouvrent partiellement sur le côté droit du véhicule.

Chaque capteur radar 21-24 émet des faisceaux d'ondes électromagnétiques, respectivement D_{f_l,} D_{f_r}, D_{r_1}, D_{r_r}, dans une direction de visée donnée de l'espace, de manière à couvrir la zone de détection correspondante du capteur radar. Lorsqu'un faisceau radar rencontre un objet situé dans la zone de détection, le faisceau est réfléchi. En mesurant le temps de vol (temps nécessaire au faisceau pour aller du capteur radar à l'objet puis pour revenir), on détermine la distance entre le capteur et l'objet. Par ailleurs, si l'objet réfléchissant est animé d'une certaine vitesse, le glissement de fréquence qui en découle entre le faisceau émis et le faisceau réfléchi permet d'obtenir une mesure de vitesse de l'objet réfléchissant.

Ainsi, le système de détection installé sur le véhicule hôte permet de recevoir des informations de détection relatives à un ensemble d'objets mobiles positionnés à l'intérieur des zones de détection des capteurs radar du système de détection. En particulier, la distance entre un objet et le capteur radar et la vitesse d'un objet sont associées à chaque objet mobile détecté.

Par contre, comme expliqué en préambule, lorsqu'un objet est immobile, il n'est pas détecté par le capteur radar. Toutefois, chaque capteur radar fournit, pour chaque faisceau radar émis dans une direction de visée donnée, une distance à laquelle porte son faisceau s'il ne détecte pas de cible, soit que le faisceau émis ne rencontre aucun obstacle, soit qu'il rencontre un obstacle, mais qu'il s'agit d'un obstacle immobile, ne générant donc pas une information de détection. Aussi, cette distance à laquelle porte le faisceau s'il ne détecte pas de cible peut être soit la portée maximale à laquelle porte le faisceau radar émis, correspondant au cas où il ne rencontre aucun obstacle, soit la distance à laquelle le faisceau radar émis rencontre un obstacle, correspondant au cas d'un obstacle immobile, sans qu'il soit possible, en l'absence de détection, de distinguer entre ces différents cas possibles.

Aussi, plutôt que d'exploiter des informations de détection résultant de la rencontre d'un faisceau radar avec un objet mobile situé dans la zone de détection, le procédé de l'invention prévoit d'exploiter les informations relatives à la distance de portée des faisceaux par direction de visée lorsque le faisceau émis ne détecte pas de cible, pour permettre de détecter un objet immobile dans l'environnement du véhicule, typiquement un véhicule à l'arrêt, ou une barrière longeant la voie de circulation.

A cet effet, on prévoit, dans un premier temps, de procéder à une répartition de l'ensemble des faisceaux radar D_{f_l}, D_{f_r}, D_{r_l}, D_{r_r}, émis par les capteurs radar 21-24 suivant une division de l'environnement du véhicule 10 en quatre secteurs angulaires Z_{front}, Zᵣₑₐᵣ, Z_{left}, Z_{right}, ces secteurs angulaires étant opposés deux à deux et s'étendant respectivement vers l'avant et vers l'arrière du véhicule, et vers le côté gauche et vers le côté droit du véhicule. Plus précisément, les secteurs angulaires avant Z_{front} et arrière Zᵣₑₐᵣ s'étendent chacun à l'avant et à l'arrière du véhicule préférentiellement symétriquement de part et d'autre de l'axe médian longitudinal X du véhicule, le secteur angulaire Z_{left}, s'étend du côté gauche du véhicule entre les secteurs angulaires avant et arrière et le secteur angulaire Z_{right} s'étend du côté droit du véhicule entre les secteurs angulaires avant et arrière. Comme illustré à la figure 1, les faisceaux radar D_{f_l} et D_{f_r} rassemblés dans le secteur angulaire Z_{front} s'étendant vers l'avant du véhicule 10 sont représentés selon un premier code graphique, les faisceaux radar D_{r_l} et D_{f_r} rassemblés dans le secteur angulaire Zᵣₑₐᵣ s'étendant vers l'arrière du véhicule 10 sont représentés selon un deuxième code graphique, les faisceaux radar D_{f_l} et D_{r_l} rassemblés dans le secteur angulaire Z_{left} s'étendant vers le côté gauche du véhicule 10 sont représentés selon un troisième code graphique et les faisceaux radar D_{f_r} et D_{f_r} rassemblés dans le secteur angulaire Z_{right} s'étendant vers le côté droit du véhicule 10 sont représentés selon un quatrième code graphique. Les faisceaux radars ainsi répartis dans ces quatre secteurs angulaires Z_{front}, Zᵣₑₐᵣ, Z_{left}, Z_{right} permettent de définir des nouvelles zones de détection couvrant spécifiquement l'avant, l'arrière, le côté gauche et le côté droit du véhicule, respectivement.

La configuration des quatre secteurs angulaires peut être réglée au moyen de deux paramètres de réglage, permettant de régler respectivement l'étendue du secteur angulaire avant Z_{front}, et du secteur angulaire arrière Zᵣₑₐᵣ. Ainsi, le secteur angulaire avant Z_{front} a une étendue angulaire définie par l'angle α entre l'axe médian longitudinal X du véhicule et un bord radial du secteur angulaire avant Z_{front}. De façon similaire, le secteur angulaire arrière Zᵣₑₐᵣ a une étendue angulaire définie par l'angle β entre l'axe médian longitudinal X du véhicule et un bord radial du secteur angulaire arrière Zᵣₑₐᵣ.

Puis, pour chacun des quatre secteurs angulaires ainsi définis, on procède ensuite à une sélection du faisceau radar qui présente la distance de portée la plus courte, parmi les faisceaux radar répartis dans chacun d'eux pour lesquels aucune cible n'est détectée.

On note ainsi D_{front}, le faisceau ayant la distance de portée la plus courte parmi les faisceaux rassemblés dans le secteur angulaire Z_{front} s'étendant à l'avant du véhicule, Dᵣₑₐᵣ, le faisceau ayant la distance de portée la plus courte parmi les faisceaux rassemblés dans le secteur angulaire Zᵣₑₐᵣ s'étendant à l'arrière du véhicule, D_{left}, le faisceau ayant la distance de portée la plus courte parmi les faisceaux rassemblés dans le secteur angulaire Z_{left} s'étendant du côté gauche du véhicule et D_{right}, le faisceau ayant la distance de portée la plus courte parmi les faisceaux rassemblés dans le secteur angulaire Z_{right} s'étendant du côté droit du véhicule.

Dans une étape suivante, on détecte l'amplitude des faisceaux réfléchis correspondant respectivement aux faisceaux sélectionnés dans les quatre secteurs angulaires, et on analyse la durée de maintien de l'amplitude de ces faisceaux par rapport à un seuil de temps prédéfini pour chaque secteur angulaire respectivement. Autrement dit, on cherche à vérifier si, pour chacun des quatre secteurs angulaires, l'amplitude réfléchie du faisceau sélectionné qui ne détecte pas de cible et présente la distance de portée la plus courte, se maintient pendant un temps minimum correspondant au seuil de temps prédéfini. Si c'est le cas, on considère qu'il y a un obstacle immobile, typiquement assimilable à un véhicule à l'arrêt, pour le secteur angulaire considéré. De cette façon, on détecte une situation d'embouteillage lorsque l'étape d'analyse détermine simultanément pour les quatre secteurs angulaires Z_{front}, Zᵣₑₐᵣ, Z_{left}, Z_{right}, que la durée de maintien de l'amplitude est supérieure ou égale au seuil de temps prédéfini pour le secteur angulaire correspondant.

A cet effet, comme illustre à la figure 2, un module d'analyse 30 de la duré de maintien de l'amplitude des faisceaux sélectionnés par rapport à des valeurs de seuil de temps prédéfinies peut consister en un filtre passe-bas, dont la constante de temps τᵢ est du même ordre de grandeur que le seuil de temps prédéfini pour chaque secteur angulaire Zᵢ (i= front, rear, left, right). Ainsi, le filtre passe-bas 30 filtre les faisceaux sélectionnés ayant la distance de portée la plus courte dont l'amplitude réfléchie se maintien pendant une durée supérieure ou égale au seuil de temps prédéfini pour chaque secteur angulaire considéré.

Selon un mode de réalisation préféré de l'invention illustré à la figure 2, lorsqu'il a été vérifié que l'amplitude des faisceaux sélectionnés ayant la distance de portée la plus courte se maintien identique pendant un seuil de temps prédéfini, on prévoit alors de comparer la distance de portée de chaque faisceau sélectionné dans les quatre secteurs angulaires avec un seuil de distance prédéfini pour chaque secteur angulaire respectivement. L'information relative à cette comparaison pour chaque secteur angulaire Zᵢ, notée Info_Zᵢ (i= front, rear, left, right), qui est de préférence une valeur booléenne, est déterminée par un module de comparaison 40, en comparant, pour chaque secteur angulaire, la distance de portée des faisceaux sélectionnés précédemment filtrés avec au moins un seuil. Selon l'exemple de réalisation de la figure 2, on fait appel à deux seuils correspondant à une fonction hystérésis, on a :

Info_Zᵢ = 0 si la distance de portée du faisceau sélectionné pour le secteur angulaire correspondant est supérieure à un premier seuil bas D_{down i} défini pour le secteur angulaire en question, ou

Info_Zᵢ =1 si ladite distance de portée est inférieure ou égale à un deuxième seuil haut D_{up i} défini pour le secteur angulaire en question et supérieure au seuil bas D_{down i}.

Alternativement, les deux seuils étant égaux à un seuil de distance unique, on a :
Info_Zᵢ = 0 si la distance de portée du faisceau sélectionné pour le secteur angulaire correspondant est supérieure au seuil de distance unique prédéfini pour le secteur angulaire en question,
Info_Zᵢ =1 si ladite distance de portée est inférieure ou égale audit seuil.

Par exemple, ce seuil de distance prédéfini est fixé inférieur ou égal à 5m, de préférence égal à 3m, pour les secteurs angulaires Z_{front} et Zᵣₑₐᵣ s'étendant vers l'avant et vers l'arrière du véhicule hôte 10. Concernant les secteurs angulaires Z_{right} et Z_{left} s'étendant du coté droit et du côté gauche du véhicule hôte10, ce seuil de distance est par exemple fixé inférieur ou égal à 2m, de préférence égal à 1,5m.

On considère donc que si la distance de portée du faisceau sélectionné pour un secteur angulaire considéré est en deçà de ce seuil, il y a un obstacle immobile assimilable à un véhicule à l'arrêt pour ce secteur angulaire à proximité immédiate du véhicule.

L'état des valeurs booléennes info_Zi ainsi déterminées par le module de comparaison 40, est utilisé en entrée d'une porte ET 50, dont la sortie TJD_Flag est utilisée pour valider la détection d'une situation d'embouteillage. Ainsi, si la condition sur la comparaison des distances de portée des faisceaux sélectionnés avec le seuil de distance prédéfini, est réalisée simultanément dans les quatre secteurs angulaires, le signal de sortie TJD_Flag passe à 1, ce qui permet de valider la détection d'une situation d'embouteillage. Cette information de validation de détection d'embouteillage TJD_Flag est fournie à une entrée d'activation d'un système de commande en mode autonome du véhicule du véhicule et, en particulier, d'un système de commande en mode autonome du véhicule adapté pour fonctionner en niveau 3 d'autonomie, de manière à activer ce système. Dans la mesure où le procédé qui vient d'être décrit permet de détecter une situation d'embouteillage même lorsque les véhicules environnants sont à l'arrêt, la disponibilité d'un tel système s'en trouve très significativement amélioré.

## Revendications

1. Procédé de détection d'une situation d'embouteillage à l'aide d'un système radar équipant un véhicule automobile hôte (10), ledit système radar comprenant des capteurs radars multifaisceaux (21-24) agencés aux coins arrière et avant du véhicule hôte, lesdits capteurs étant aptes à détecter des objets mobiles uniquement, les faisceaux radar étant émis dans différentes directions de visée données de manière à couvrir, pour chaque capteur radar, une zone de détection s'étendant entre une direction radiale orientée obliquement vers l'avant et une direction radiale orientée obliquement vers l'arrière, chaque capteur radar étant apte à fournir, pour chaque direction de visée donnée, la distance de portée du faisceau radar émis dans ladite direction s'il n'y détecte pas d'objet mobile, le procédé étant **caractérisé en ce qu'**il comprend des étapes de :
- répartition de l'ensemble des faisceaux radar (D_{f_l}, D_{r_r}, D_{r_l}, D_{r_r}) émis par les capteurs radar suivant une division de l'environnement du véhicule en quatre secteurs angulaires (Z_{front}, Zᵣₑₐᵣ, Z_{left}, Z_{right}), opposés deux à deux, s'étendant respectivement vers l'avant et vers l'arrière du véhicule et vers le côté droit et vers le côté gauche du véhicule,
- sélection pour chacun des quatre secteurs angulaires, parmi les faisceaux répartis dans chacun d'eux pour lesquels aucune cible n'est détectée, du faisceau (D_{front}, Dᵣₑₐᵣ, D_{left}, D_{right}) présentant la distance de portée la plus courte,
- détection de l'amplitude des faisceaux réfléchis correspondant respectivement auxdits faisceaux sélectionnés dans les quatre secteurs angulaires, et
- analyse de la durée de maintien de l'amplitude desdits faisceaux réfléchis par rapport à un seuil de temps prédéfini pour chaque secteur angulaire respectivement,
le procédé détectant une situation d'embouteillage lorsque l'étape d'analyse détermine simultanément pour les quatre secteurs angulaires, que ladite durée de maintien de l'amplitude est supérieure ou égale audit seuil de temps prédéfini.

2. Procédé selon la revendication 1, **caractérisé en ce que** l'étape d'analyse comprend en outre une étape de comparaison de la distance de portée de chaque faisceau sélectionné dans les quatre secteurs angulaires avec un seuil de distance prédéfini pour chaque secteur angulaire respectivement, le procédé détectant une situation d'embouteillage lorsque l'étape de comparaison détermine simultanément pour les quatre secteurs angulaires que ladite distance de portée est inférieure ou égale audit seuil de distance prédéfini.

3. Procédé selon la revendication 2, **caractérisé en ce que** ledit seuil de distance prédéfini est fixé inférieur ou égal à 5m, de préférence égal à 3m, pour les secteurs angulaires s'étendant vers l'avant et vers l'arrière du véhicule hôte.

4. Procédé selon la revendication 2 ou 3, **caractérisé en ce que** ledit seuil de distance prédéfini est fixé inférieur ou égal à 2m, de préférence égal à 1,5m, pour les secteurs angulaires s'étendant du coté droit et du côté gauche du véhicule hôte.

5. Procédé selon la revendication 1 ou 2, **caractérisé en ce qu'**il comprend une étape d'activation d'un mode autonome de conduite du véhicule hôte lorsqu'une situation d'embouteillage est détectée.

6. Procédé selon la revendication 3, **caractérisé en ce que** ledit mode autonome de conduite est adapté pour assurer l'ensemble des tâches opérationnelles de conduite du véhicule hôte.

7. Dispositif de détection d'une situation d'embouteillage comportant un système radar embarqué sur un véhicule automobile hôte (10), ledit système radar comprenant des capteurs radars multifaisceaux (21-24) agencés aux coins arrière et avant dudit véhicule, lesdits capteurs étant aptes à détecter des objets mobiles uniquement, les faisceaux radar étant émis dans différentes directions de visée données de manière à couvrir, pour chaque capteur radar, une zone de détection s'étendant entre une direction radiale orientée obliquement vers l'avant et une direction radiale orientée obliquement vers l'arrière, chaque capteur radar étant apte à fournir, pour chaque direction de visée donnée, la distance de portée du faisceau radar émis dans ladite direction s'il n'y détecte pas d'objet mobile, le dispositif étant **caractérisé en ce qu'**il comprend une unité de traitement des faisceaux radars émis, adaptée pour opérer une répartition de l'ensemble des faisceaux radar (D_{f_l,} Df_r, D_{r_l}, D_{r_r}) émis par les capteurs radar suivant une division de l'environnement du véhicule en quatre secteurs angulaires (Zfront, Zrear, Zleft, Zright), opposés deux à deux, s'étendant respectivement vers l'avant et vers l'arrière du véhicule et vers le côté droit et vers le côté gauche du véhicule, et à sélectionner pour chacun desdits quatre secteurs angulaires, parmi les faisceaux répartis dans chacun d'eux pour lesquels aucune cible n'est détectée, le faisceau (Dfront, Drear, Dleft, Dright) présentant la distance de portée la plus courte, ladite unité de traitement comprenant un module d'analyse (30) adapté à vérifier la durée de maintien de l'amplitude des faisceaux réfléchis correspondant respectivement auxdits faisceaux sélectionnés dans les quatre secteurs angulaires, par rapport à un seuil de temps prédéfini pour chaque secteur angulaire respectivement, ledit dispositif détectant une situation d'embouteillage lorsque ledit module d'analyse détermine simultanément pour les quatre secteurs angulaires, que ladite durée de maintien de l'amplitude est supérieure ou égale audit seuil de temps prédéfini.

8. Dispositif selon la revendication 7, **caractérisé en ce qu'**il comprend en outre un module de comparaison (40) de la distance de portée de chaque faisceau sélectionné dans les quatre secteurs angulaires avec un seuil de distance prédéfini pour chaque secteur angulaire respectivement, le dispositif détectant une situation d'embouteillage lorsque le module de comparaison détermine simultanément pour les quatre secteurs angulaires que ladite distance de portée est inférieure ou égale audit seuil de distance prédéfini.

9. Dispositif selon la revendication 7 ou 8, **caractérisé en ce qu'**il comprend des moyens d'activation d'un système de commande en mode autonome du véhicule lorsqu'une situation d'embouteillage est détectée.

10. Véhicule automobile **caractérisé en ce qu'**il comprend un dispositif selon l'une quelconque des revendications 7 à 9.

## Patentansprüche

1. Verfahren zur Erkennung einer Verkehrsstausituation mit Hilfe eines Radarsystems, mit dem ein Wirtskraftfahrzeug (10) ausgerüstet ist, wobei das Radarsystem Mehrstrahl-Radarsensoren (21-24) beinhaltet, die an den hinteren und vorderen Ecken des Wirtsfahrzeugs eingerichtet sind, wobei die Sensoren dazu fähig sind, ausschließlich sich bewegende Objekte zu erkennen, wobei die Radarstrahlen in unterschiedliche gegebene Blickrichtungen emittiert werden, um für jeden Radarsensor einen Erkennungsbereich abzudecken, der sich zwischen einer schräg nach vorne ausgerichteten radialen Richtung und einer schräg nach hinten ausgerichteten radialen Richtung erstreckt, wobei jeder Radarsensor dazu fähig ist, für jede gegebene Blickrichtung die Reichweite des in die Richtung emittierten Strahls bereitzustellen, wenn er in dieser kein sich bewegendes Objekt erkennt, wobei das Verfahren **dadurch gekennzeichnet ist, dass** es folgende Schritte beinhaltet:
- Verteilen des Satzes Radarstrahlen (D_{f_l}, D_{f_r}, D_{r_l}, D_{r_r}), der durch die Radarsensoren emittiert wird, gemäß einer Unterteilung der Umgebung des Fahrzeugs in vier Winkelsektoren (Z_{front}, Zᵣₑₐᵣ, Z_{left}, Z_{right}) , die sich paarweise gegenüberliegen und sich jeweils von dem Fahrzeug nach vorne und nach hinten und zur rechten Seite und zur linken Seite des Fahrzeugs erstrecken,
- Auswählen, für jeden der vier Winkelsektoren, aus den darin jeweils verteilten Strahlen, für die kein Ziel erkannt wird, desjenigen Strahls (D_{front}, Dᵣₑₐᵣ, D_{left}, D_{right}), der die kürzeste Reichweite aufweist,
- Erkennen der Amplitude derjenigen reflektierten Strahlen, die jeweils den in den vier Winkelsektoren ausgewählten Strahlen entsprechen, und
- Analysieren der Haltedauer der Amplitude der reflektierten Strahlen jeweils in Bezug auf einen vordefinierten Zeitschwellenwert für jeden Winkelsektor, wobei das Verfahren eine Verkehrsstausituation erkennt, wenn der Schritt des Analysierens für die vier Winkelsektoren gleichzeitig bestimmt, dass die Haltedauer der Amplitude größer als oder gleich dem vordefinierten Zeitschwellenwert ist.

2. Verfahren nach Anspruch 1, **dadurch gekennzeichnet, dass** der Schritt des Analysierens ferner einen Schritt des Vergleichens der Reichweite jedes in den vier Winkelsektoren ausgewählten Strahls jeweils mit einem vordefinierten Abstandsschwellenwert für jeden Winkelsektor beinhaltet, wobei das Verfahren eine Verkehrsstausituation erkennt, wenn der Schritt des Vergleichens für die vier Winkelsektoren gleichzeitig bestimmt, dass die Reichweite kleiner als oder gleich dem vordefinierten Abstandsschwellenwert ist.

3. Verfahren nach Anspruch 2, **dadurch gekennzeichnet, dass** der vordefinierte Abstandsschwellenwert für die Winkelsektoren, die sich von dem Wirtsfahrzeug nach vorne und nach hinten erstrecken, auf kleiner als oder gleich 5 m, vorzugsweise gleich 3 m, festgelegt ist.

4. Verfahren nach Anspruch 2 oder 3, **dadurch gekennzeichnet, dass** der vordefinierte Abstandsschwellenwert für die Winkelsektoren, die sich von der rechten Seite und der linken Seite des Wirtsfahrzeugs erstrecken, auf kleiner als oder gleich 2 m, vorzugsweise gleich 1,5 m, festgelegt ist.

5. Verfahren nach Anspruch 1 oder 2, **dadurch gekennzeichnet, dass** es einen Schritt des Aktivierens eines autonomen Fahrmodus des Wirtsfahrzeugs beinhaltet, wenn eine Verkehrsstausituation erkannt wird.

6. Verfahren nach Anspruch 3, **dadurch gekennzeichnet, dass** der autonome Fahrmodus dazu angepasst ist, alle operativen Fahraufgaben des Wirtsfahrzeugs sicherzustellen.

7. Vorrichtung zur Erkennung einer Verkehrsstausituation, die ein in ein Wirtskraftfahrzeug (10) integriertes Radarsystem umfasst, wobei das Radarsystem Mehrstrahl-Radarsensoren (21-24) beinhaltet, die an den hinteren und vorderen Ecken des Fahrzeugs eingerichtet sind, wobei die Sensoren dazu fähig sind, ausschließlich sich bewegende Objekte zu erkennen, wobei die Radarstrahlen in unterschiedliche gegebene Blickrichtungen emittiert werden, um für jeden Radarsensor einen Erkennungsbereich abzudecken, der sich zwischen einer schräg nach vorne ausgerichteten radialen Richtung und einer schräg nach hinten ausgerichteten radialen Richtung erstreckt, wobei jeder Radarsensor dazu fähig ist, für jede gegebene Blickrichtung die Reichweite des in die Richtung emittierten Strahls bereitzustellen, wenn er in dieser kein sich bewegendes Objekt erkennt, wobei die Vorrichtung **dadurch gekennzeichnet ist, dass** sie eine Einheit zur Verarbeitung der emittierten Radarstrahlen beinhaltet, die dazu angepasst ist, eine Verteilung des Satzes Radarstrahlen (D_{f_l,} Df_r, Dr_l, Dr_r), der durch die Radarsensoren emittiert wird, gemäß einer Unterteilung der Umgebung des Fahrzeugs in vier Winkelsektoren (Zfront, Zrear, Zleft, Zright), die sich paarweise gegenüberliegen und sich jeweils von dem Fahrzeug nach vorne und nach hinten und zur rechten Seite und zur linken Seite des Fahrzeugs erstrecken, vorzunehmen und für jeden der vier Winkelsektoren innerhalb der darin jeweils verteilten Strahlen, für die kein Ziel erkannt wird, denjenigen Strahl (Dfront, Drear, Dleft, Dright) auszuwählen, der die kürzeste Reichweite aufweist, wobei die Verarbeitungseinheit ein Analysemodul (30) beinhaltet, das dazu fähig ist, die Haltedauer der Amplitude der reflektierten Strahlen, die jeweils den in den vier Winkelsektoren ausgewählten Strahlen entsprechen, jeweils in Bezug auf einen vordefinierten Zeitschwellenwert für jeden Winkelsektor zu prüfen, wobei die Vorrichtung eine Verkehrsstausituation erkennt, wenn das Analysemodul für die vier Winkelsektoren gleichzeitig bestimmt, dass die Haltedauer der Amplitude größer als oder gleich dem vordefinierten Zeitschwellenwert ist.

8. Vorrichtung nach Anspruch 7, **dadurch gekennzeichnet, dass** sie ferner ein Modul zum Vergleichen (40) der Reichweite jedes in den vier Winkelsektoren ausgewählten Strahls jeweils mit einem vordefinierten Abstandsschwellenwert für jeden Winkelsektor beinhaltet, wobei die Vorrichtung eine Verkehrsstausituation erkennt, wenn das Vergleichsmodul für die vier Winkelsektoren gleichzeitig bestimmt, dass die Reichweite kleiner als oder gleich dem vordefinierten Abstandsschwellenwert ist.

9. Vorrichtung nach Anspruch 7 oder 8, **dadurch gekennzeichnet, dass** sie Mittel beinhaltet, die ein Steuersystem in einem autonomen Modus des Fahrzeugs aktivieren, wenn eine Verkehrsstausituation erkannt wird.

10. Kraftfahrzeug, **dadurch gekennzeichnet, dass** es eine Vorrichtung nach einem der Ansprüche 7 bis 9 beinhaltet.

## Claims

1. Method for detecting a traffic congestion situation by means of a radar system equipping a host motor vehicle (10), said radar system comprising multi-beam radar sensors (21-24) arranged at the rear and front corners of the host vehicle, said sensors being capable of detecting moving objects only, the radar beams being emitted in various given targeted directions in such a manner as to cover, for each radar sensor, a detection zone extending between a radial direction oriented obliquely towards the front and a radial direction oriented obliquely towards the rear, each radar sensor being capable of supplying, for each given targeted direction, the range of the radar beam emitted in said direction if no moving object is detected therein, the method being **characterized in that** it comprises steps for:
- distribution of all of the radar beams (D_{f_l}, D_{f_r}, D_{r_l}, D_{r_r}) emitted by the radar sensors according to a division of the environment of the vehicle into four angular sectors (Z_{front}, Zᵣₑₐᵣ, Z_{left}, Z_{right}), in opposing pairs, respectively extending towards the front and towards the rear of the vehicle and towards the right side and towards the left side of the vehicle,
- selection for each of the four angular sectors, from amongst the beams distributed into each of them for which no target is detected, of the beam (D_{front}, Dᵣₑₐᵣ, D_{left}, D_{right}) having the shortest range,
- detection of the amplitude of the reflected beams corresponding respectively to said beams selected within the four angular sectors, and
- analysis of the period of time for which the amplitude of said reflected beams is maintained with respect to a predefined time threshold for each angular sector, respectively,
the method detecting a traffic congestion situation when the analysis step determines, simultaneously for the four angular sectors, that said period of time for which the amplitude is maintained is greater than or equal to said predefined time threshold.

2. Method according to Claim **1, characterized in that** the analysis step furthermore comprises a step for comparing the range of each beam selected within the four angular sectors with a predefined distance threshold for each angular sector respectively, the method detecting a traffic congestion situation when the comparison step determines, simultaneously for the four angular sectors, that said range is less than or equal to said predefined distance threshold.

3. Method according to Claim 2, **characterized in that** said predefined distance threshold is fixed at less than or equal to 5 m, preferably equal to 3 m, for the angular sectors extending towards the front and towards the rear of the host vehicle.

4. Method according to Claim 2 or 3, **characterized in that** said predefined distance threshold is fixed at less than or equal to 2 m, preferably equal to 1.5 m, for the angular sectors extending from the right side and from the left side of the host vehicle.

5. Method according to Claim 1 or 2, **characterized in that** it comprises a step for activating an autonomous driving mode of the host vehicle when a traffic congestion situation is detected.

6. Method according to Claim 3, **characterized in that** said autonomous driving mode is designed to provide all of the operational driving tasks of the host vehicle.

7. Device for detecting a traffic congestion situation comprising a radar system on board a host motor vehicle (10), said radar system comprising multi-beam radar sensors (21-24) arranged at the rear and front corners of said vehicle, said sensors being capable of detecting moving objects only, the radar beams being emitted in various given targeted directions in such a manner as to cover, for each radar sensor, a detection zone extending between a radial direction oriented obliquely towards the front and a radial direction oriented obliquely towards the rear, each radar sensor being capable of supplying, for each given targeted direction, the range of the radar beam emitted in said direction if no moving object is detected therein, the device being **characterized in that** it comprises a unit for processing the emitted radar beams, designed to apply a distribution of all of the radar beams (Df_l_{,} Df_r, Dr_l, Dr_r) emitted by the radar sensors according to a division of the environment of the vehicle into four angular sectors (Zfront, Zrear, Zleft, Zright), in opposing pairs, respectively extending towards the front and towards the rear of the vehicle and towards the right side and towards the left side of the vehicle, and to select for each of said four angular sectors, from amongst the beams distributed into each of them for which no target is detected, the beam (Dfront, Drear, Dleft, Dright) having the shortest range, said processing unit comprising an analysis module (30) designed to verify the period of time for which the amplitude of the reflected beams, corresponding respectively to said beams selected within the four angular sectors, is maintained with respect to a predefined time threshold for each angular sector respectively, said device detecting a traffic congestion situation when said analysis module determines, simultaneously for the four angular sectors, that said period of time for which the amplitude is maintained is greater than or equal to said predefined time threshold.

8. Device according to Claim 7, **characterized in that** it furthermore comprises a module (40) for comparing the range of each beam selected within the four angular sectors with a predefined distance threshold for each angular sector respectively, the device detecting a traffic congestion situation when the comparison module determines, simultaneously for the four angular sectors, that said range is less than or equal to said predefined distance threshold.

9. Device according to Claim 7 or 8, **characterized in that** it comprises means for activating a system for controlling the autonomous mode of the vehicle when a traffic congestion situation is detected.

10. Motor vehicle, **characterized in that** it comprises a device according to any one of Claims 7 to 9.
